# EUROPEAN PATENT APPLICATION

(11) **EP 4 428 955 A1**
(43) Date of publication of application: **11.09.2024**
(21) Application number: 23835730.5
(22) Date of filing: 26.06.2023
(51) Int. Cl.: H01M 4/525, H01M 4/36, H01M 4/505, H01M 10/54, H01M 4/02

(54) **RECYCLED CATHODE ACTIVE MATERIAL, METHOD FOR RECYCLING CATHODE ACTIVE MATERIAL, AND SECONDARY BATTERY COMPRISING SAME**

(30) Priority: 06.07.2022 KR 20220082984; 06.07.2022 KR 20220082985; 23.06.2023 KR 20230081265
(71) Applicant: LG Energy Solution, Ltd., Seoul 07335 (KR)
(72) Inventor: CHOI, Jeong Mi, Daejeon 34122 (KR); YANG, Doo Kyung, Daejeon 34122 (KR); KIM, Min Seo, Daejeon 34122 (KR); SEONG, Eunkyu, Daejeon 34122 (KR); KIM, Yeon Jun, Daejeon 34122 (KR); YU, Hyemin, Daejeon 34122 (KR)
(74) Representative: Hoffmann Eitle
(86) International application number: PCT/KR2023/008812
(87) International publication number: WO 2024/010263

(57) **Abstract**

The present invention relates to a recycled positive electrode active material, a method of recycling a positive electrode active material, and a secondary battery including the recycled positive electrode active material. More particularly, the present invention relates to a recycled positive electrode active material including one or more selected from the group consisting of a lithium nickel oxide (LNO)-based positive electrode active material, a nickel·cobalt·manganese (NCM)-based positive electrode active material, a nickel·cobalt·aluminum (NCA)-based positive electrode active material, and a nickel·cobalt·manganese·aluminum (NCMA)-based positive electrode active material, including 60 mol% or more of Ni, containing fluorine (F) in an amount of 250 mg/kg or less, and having a crystallite size of 122 nm or less, a method of recycling a positive electrode active material, and a secondary battery including the recycled positive electrode active material. According to the present invention, the present invention has an effect of providing a positive electrode active material prepared by introducing oxygen into a waste positive electrode containing a high-nickel (Ni) positive electrode material, performing oxidation heat treatment, performing first washing, adding a lithium precursor, performing annealing, and performing second washing to reduce the amount of fluorine (F) on the surface of a recycled positive electrode active material, wherein the oxidation heat treatment is performed in two steps to completely burn a binder, reduce fluorine (F) and residual lithium generated in the heat treatment step, and reduce a crystallite size; and having excellent capacity, resistance characteristics, and capacity characteristics. In addition, the present invention has an effect of providing a method of recycling a positive electrode active material, characterized in that eco-friendliness is secured by not using acids in recovery and recycling processes; process cost is reduced because neutralization and wastewater treatment are not required accordingly; no metal element is discarded by recycling a positive electrode active material in an intact state without disassembling the positive electrode active material; the risk of toxic gas generation or explosion is excluded by not using an organic solvent; and economic feasibility and productivity are greatly improved by omitting a washing process.

## Description

### [Technical Field]

### [Cross-Reference to Related Applications]

This application claims priority to Korean Patent Application No. 10-2023-0081265, refiled on June 23, 2023, based on Korean Patent Application No. 10-2022-0082984, filed on July 6, 2022, and Korean Patent Application No. 10-2022-0082985, filed on July 6, 2022, in the Korean Intellectual Property Office, the disclosure of which is incorporated herein by reference.

The present invention relates to a recycled positive electrode active material, a method of recycling a positive electrode active material, and a secondary battery including the recycled positive electrode active material. More particularly, the present invention relates to a positive electrode active material prepared by introducing oxygen into a waste positive electrode containing a high-nickel (Ni) positive electrode material, performing oxidation heat treatment, performing first washing, adding a lithium precursor, performing annealing, and performing second washing to remove fluorine (F) on the surface of a recycled positive electrode active material and the lithium precursor not participating in the reaction, wherein the oxidation heat treatment is performed in two steps to completely burn a binder, reduce fluorine (F) and residual lithium generated in the heat treatment step, and reduce a crystallite size; and having excellent capacity, resistance characteristics, and capacity characteristics. In addition, the present invention relates to a method of recycling a positive electrode active material, characterized in that eco-friendliness is secured by not using acids in recovery and recycling processes; process cost is reduced because neutralization and wastewater treatment are not required accordingly; no metal element is discarded by recycling a positive electrode active material in an intact state without disassembling the positive electrode active material; the risk of toxic gas generation or explosion is excluded by not using an organic solvent; and economic feasibility and productivity are greatly improved by omitting a washing process.

### [Background Art]

In general, a lithium secondary battery consists of a positive electrode formed by coating a metal foil, such as aluminum, with a positive electrode active material layer, a negative electrode formed by coating a metal foil, such as copper, with a negative electrode active material layer, a separator for preventing mixing of the positive and negative electrodes, an electrolyte solution that allows lithium ions to move between the positive and negative electrodes, and the like.

In the positive electrode active material layer, a lithium-based oxide is mainly used as an active material. In the negative electrode active material layer, a carbon material is mainly used as an active material. In general, the lithium-based oxide contains a rare metal such as cobalt, nickel, or manganese. Accordingly, studies on recovery and recycling of rare metals from the positive electrodes of lithium secondary batteries that are discarded after use or positive electrode scraps (hereinafter referred to as "waste positive electrodes") generated when manufacturing lithium secondary batteries are being actively conducted.

According to the related arts for recovering rare metals from a waste positive electrode, after dissolving a waste positive electrode using hydrochloric acid, sulfuric acid, or nitric acid, rare metals such as cobalt, manganese, and nickel are extracted using an organic solvent, and then the extracted metals are used as raw materials for synthesizing a positive electrode active material.

However, in the case of the method of extracting rare metals using an acid, a neutralization process and a wastewater treatment process are necessarily required due to environmental pollution problems, which greatly increases process costs. In addition, lithium, which is the main metal of a positive electrode active material, cannot be recovered by the above method.

To solve these drawbacks, methods (direct recycling methods) of directly recycling a positive electrode active material from a waste positive electrode without decomposing the positive electrode active material are being studied. As such methods, there are mainly four methods such as calcination, solvent dissolution, aluminum (Al) foil dissolution, and crushing & screening.

The calcination method can be performed in a simple process, but has disadvantages such as formation of foreign substances on the surface of a recycled positive electrode active material, which degrades the rate performance of a battery. In addition to the above disadvantages, waste gas is generated, and energy consumption is excessive.

In addition, when using the solvent dissolution method, a recycled positive electrode active material having a relatively clean surface may be obtained. However, since a solvent such as N-methyl-2-pyrrolidone (NMP) used to dissolve a binder is a toxic gas and has an explosion hazard, the method has poor stability and requires an expensive solvent recovery process.

In addition, in the case of the aluminum foil dissolution method, process stability is good, process cost is low, and binder removal is easy. However, foreign substances that are difficult to remove are formed on the surface of a recycled positive electrode active material, and there is a risk of explosion due to hydrogen gas generated in a process of removing aluminum foil.

In addition, the crushing & screening method can be performed through the simplest process among the above methods. However, it is difficult to completely separate a current collector and a positive electrode active material, the particle size distribution of the positive electrode active material is changed during a crushing process, and the battery characteristics of the recycled positive electrode active material are degraded due to a residual binder.

Therefore, there is an urgent need to develop a method of safely recycling a positive electrode active material having improved rate performance in an environment-friendly manner at a low cost through a simple process without loss of metal elements from a waste positive electrode.

### [Disclosure]

### [Technical Problem]

Therefore, the present invention has been made in view of the above problems, and it is one object of the present invention to provide a positive electrode active material prepared by introducing oxygen into a waste positive electrode containing a high-nickel (Ni) positive electrode material, performing oxidation heat treatment, performing first washing, adding a lithium precursor, performing annealing, and performing second washing to remove fluorine (F) on the surface of a recycled positive electrode active material and the lithium precursor not participating in the reaction, wherein the oxidation heat treatment is performed in two steps to completely burn a binder, reduce fluorine (F) and residual lithium generated in the heat treatment step, and reduce a crystallite size, and having excellent capacity, resistance characteristics, and capacity characteristics; and a method of recycling a positive electrode active material, characterized in that eco-friendliness is secured by not using acids in a process of recovering and recycling a positive electrode active material, process cost is reduced because neutralization and wastewater treatment are not required accordingly, no metal element is discarded by recycling a positive electrode active material in an intact state without disassembling the positive electrode active material, the risk of toxic gas generation or explosion is excluded by not using an organic solvent, and economic feasibility and productivity are greatly improved by omitting a washing process.

It is another object of the present invention to provide a secondary battery having excellent initial discharge capacity, rate performance, and capacity characteristics.

The above and other objects can be accomplished by the present invention described below.

### [Technical Solution]

I) In accordance with one aspect of the present invention, provided is a positive electrode active material including one or more selected from the group consisting of a lithium nickel oxide (LNO)-based positive electrode active material, a nickel-cobalt-manganese (NCM)-based positive electrode active material, a nickel-cobalt-aluminum (NCA)-based positive electrode active material, and a nickel-cobalt-manganese-aluminum (NCMA)-based positive electrode active material, including 60 mol% or more of Ni, containing fluorine (F) in an amount of 250 mg/kg or less, and having a crystallite size of 122 nm or less.
II) In I), a surface of the positive electrode active material may be coated with a coating agent containing a metal or carbon.
III) In I) or II), the metal may be boron (B), tungsten (W), or a mixture thereof.
IV) In I) to III), the positive electrode active material may be a recycled positive electrode active material.
V) In accordance with another aspect of the present invention, provided is a method of recycling a positive electrode active material, the method including injecting oxygen into a waste positive electrode having a positive electrode active material layer including 60 mol% or more of Ni on a current collector and subjecting the waste positive electrode to oxidation heat treatment to thermally decompose a binder and a conductive material in the positive electrode active material layer to separate the current collector from the positive electrode active material layer and recover a positive electrode active material from the positive electrode active material layer; first washing the recovered positive electrode active material; adding a lithium precursor to the first washed positive electrode active material and performing annealing; and second washing the annealed positive electrode active material.
VI) In V), the heat treatment may be performed at 300 to 650 °C.
VII) In V) or VI), in the heat treatment, first heat treatment may be performed at 300 to 450 °C, and then second heat treatment may be performed at 500 to 650 °C.
VIII) In V) to VII), the first heat treatment may be performed for 10 minutes to 3 hours, and the second heat treatment may be performed for 10 minutes to 2 hours.
IX) In V) to VIII), the oxygen may have a purity of 59 % or more.
X) In V) to IX), the first washing may be performed by immersing the recovered positive electrode active material in water or a basic aqueous lithium compound solution as a washing liquid or by stirring while immersing the recovered positive electrode active material in water or a basic aqueous lithium compound solution as a washing liquid.
XI) In V) to X), the basic aqueous lithium compound solution may include a lithium compound in an amount of greater than 0 % by weight and 15 % by weight or less.
XII) In V) to XI), in the annealing, a method of adding a lithium precursor solution to the first washed positive electrode active material may be to mix the first washed positive electrode active material and the lithium precursor solution and perform spray drying.
XIII) In V) to XII), the second washing may include mixing the annealed positive electrode active material and water as a washing liquid and performing filtration; and drying a solid positive electrode active material obtained after the filtration.
XIV) In V) to XIII), the lithium precursor may include one or more of LiOH, Li₂CO₃, LiNO₃, and Li₂O.
XV) In V) to XIV), based on 100 mol% in total of lithium in a positive electrode active material used as a raw material when forming the positive electrode active material layer, the lithium precursor may be added in an amount corresponding to 1 mol% to 40 mol%.
XVI) In V) to XV), the annealing may be performed at 400 to 1,000 °C.
XVII) In V) to XVI), the method of recycling a positive electrode active material may include obtaining a reusable positive electrode active material by coating a surface of the second washed positive electrode active material.
XVIII) In V) to XVII), in the surface coating, the surface may be coated with one or more of a metal, an organic metal, and a carbon component in a solid or liquid manner, and then may be heat-treated at 100 to 1,200 °C.
XIX) In accordance with still another aspect of the present invention, provided is a recycled positive electrode active material prepared using the method of recycling a positive electrode active material according to V) to XVIII).
XX) In accordance with still another aspect of the present invention, provided is a positive electrode active material including one or more selected from the group consisting of a lithium nickel oxide (LNO)-based positive electrode active material, a nickel·cobalt·manganese (NCM)-based positive electrode active material, a nickel·cobalt·aluminum (NCA)-based positive electrode active material, and a nickel·cobalt·manganese·aluminum (NCMA)-based positive electrode active material, including 60 mol% or more of Ni, containing fluorine (F) in an amount of 305 mg/kg or less, and having a crystallite size of 139 nm or less.
XXI) In XX), in the positive electrode active material, a content of residual Li₂CO₃ may be 0.16 % by weight or less.
XXII) In XX) or XXI), the positive electrode active material may be a recycled positive electrode active material.
XXIII) In accordance with yet another aspect of the present invention, provided is a secondary battery including the positive electrode active material according to any one of I) to IV), XIX), XX), and XXII).

### [Advantageous Effects]

According to the present invention, the present invention has an effect of providing a positive electrode active material prepared by introducing oxygen into a waste positive electrode containing a high-nickel (Ni) positive electrode material, performing oxidation heat treatment, performing first washing, adding a lithium precursor, performing annealing, and performing second washing to remove fluorine (F) on the surface of a recycled positive electrode active material and the lithium precursor not participating in the reaction, wherein the oxidation heat treatment is performed in two steps to completely burn a binder, reduce fluorine (F) and residual lithium generated in the heat treatment step, and reduce a crystallite size; and having excellent capacity, resistance characteristics, and capacity characteristics. In addition, the present invention has an effect of providing a method of recycling a positive electrode active material, characterized in that eco-friendliness is secured by not using acids in a process of recovering and recycling a positive electrode active material; process cost is reduced because neutralization and wastewater treatment are not required accordingly; no metal element is discarded by recycling a positive electrode active material in an intact state without disassembling the positive electrode active material; the risk of toxic gas generation or explosion is excluded by not using an organic solvent; and economic feasibility and productivity are greatly improved by omitting a washing process.

### [Description of Drawings]

The following drawings attached to the present specification illustrate embodiments of the present invention, and are intended to further understand the technical spirit of the present invention together with the detailed description to be described later, so the present invention is not limited to these drawings.
FIG. 1 is a diagram showing positive electrode scraps discarded after cutting a positive electrode sheet to obtain electrode plates.
FIG. 2 includes SEM images of the recycled positive electrode active materials of Example 1 and Comparative Examples 1 to 3.
FIG. 3 is a graph showing the charge capacity of coin cells using the recycled positive electrode active materials of Example 1 and Comparative Examples 1 to 3.
FIG. 4 is a graph showing change in capacity retention rate (%) and resistance increase rate (%) depending on the number of cycles as a result of performing charge/discharge cycle of mono cells using the recycled positive electrode active materials of Example 1 and Comparative Examples 1 to 3.
FIG. 5 is a graph showing the charge capacity of coin cells using the recycled positive electrode active materials of Additional Examples 1 to 3 and Additional Comparative Examples 1 and 2.
FIG. 6 is a graph showing change in capacity retention rate (%) depending on the number of cycles as a result of performing charge/discharge cycle of mono cells using the recycled positive electrode active materials of Additional Examples 1 to 3 and Additional Comparative Examples 1 and 2.
FIG. 7 is a flowchart for explaining a process of recycling a positive electrode active material according to the present invention.

### [Best Mode]

The present inventors confirmed that, while researching a direct recycling method to obtain a recycled positive electrode active material having excellent battery performance by directly recycling a positive electrode active material from a waste positive electrode without decomposing the positive electrode active material, when oxygen was injected into a waste positive electrode containing a high-nickel (Ni) positive electrode material, oxidation heat treatment was performed, first washing was performed, a lithium precursor was added thereto, annealing was performed, and then second washing was performed, fluorine (F) and the lithium precursor not used in the reaction were removed from the surface of a recycled positive electrode active material, and a crystallite size was reduced. In addition, when the oxidation heat treatment step was performed in two steps, a binder was completely removed, fluorine (F) and residual lithium generated in the heat treatment step were reduced, and a crystallite size was reduced. As a result, the battery characteristics of the recycled positive electrode active material were improved. Based on these results, the present inventors conducted further studies to complete the present invention.

Hereinafter, a recycled positive electrode active material, a method of recycling a positive electrode active material, and a secondary battery including the recycled positive electrode active material according to the present invention will be described in detail.

The terms and words which are used in the present specification and the appended claims should not be construed as being confined to common meanings or dictionary meanings but should be construed as meanings and concepts matching the technical spirit of the present invention in order to describe the present invention in the best fashion. In addition, since the configurations shown in the examples and drawings of this specification are only embodiments of the present invention, and do not represent all the technical spirit of the present invention, it should be understood that there are many equivalents and variations that may be substituted for the above configurations, and that the present invention may be arranged, substituted, combined, separated, or designed in various other configurations.

Unless otherwise defined, all technical and scientific terms used in this description have the same meaning as commonly understood by those of ordinary skill in the art to which the present invention pertains.

### Positive electrode active material

A positive electrode active material of the present invention includes one or more selected from the group consisting of a lithium nickel oxide (LNO)-based positive electrode active material, a nickel·cobalt·manganese (NCM)-based positive electrode active material, a nickel·cobalt·aluminum (NCA)-based positive electrode active material, and a nickel·cobalt·manganese·aluminum (NCMA)-based positive electrode active material, includes 60 mol% or more of Ni, contains fluorine (F) in an amount of 250 mg/kg or less, and has an average crystallite size of 122 nm or less. In this case, charge capacity, resistance characteristics, and capacity characteristics may be excellent.

The positive electrode active material may include preferably one or more selected from the group consisting of a lithium cobalt oxide such as LiCoO₂ (hereinafter referred to as "LCO"); a lithium manganese oxide such as LiMnO₂ or LiMn₂O₄; a lithium iron phosphate compound such as LiFePO₄; a lithium nickel cobalt aluminum oxide (NCA); a lithium nickel oxide such as LiNiO₂; a nickel manganese-based lithium composite metal oxide obtained by replacing a part of nickel (Ni) with manganese (Mn) in the lithium nickel oxide; and an NCM-based lithium composite transition metal oxide obtained by replacing a part of nickel (Ni) with manganese (Mn) and cobalt (Co) in the lithium nickel oxide. In this case, electrochemical performance, resistance characteristics, and capacity characteristics may be excellent.

As a specific example, the positive electrode active material may be a compound represented by Chemical Formula 1 below.

[Chemical Formula 1] LiₐNiₓMn_{y}Co_{z}M_{w}O_{2+δ}

In Chemical Formula 1, M includes one or more selected from the group consisting of B, W, Al, Ti, and Mg, 1 < a ≤ 1.1, 0 < x < 0.95, 0 < y < 0.8, 0 < z < 1.0, 0 ≤ w ≤ 0.1, -0.02 ≤ δ ≤ 0.02, and x + y + z + w = 1. In this case, electrochemical performance, resistance characteristics, and capacity characteristics may be excellent.

The positive electrode active material may include Ni in an amount of preferably 80 mol% or more, more preferably 81 mol% or more, still more preferably 81 to 95 mol%. Within this range, charge capacity, resistance characteristics, and capacity characteristics may be excellent.

In the present disclosure, the Ni content may be measured by ion chromatography (IC) commonly used in the technical field to which the present invention pertains. As a specific example, an ion chromatography (IC)-inductively coupled plasma (ICP) analyzer, an IC-ICP-MS analyzer, or an IC-ICP-AEC analyzer may be used to measure the Ni content.

For example, the positive electrode active material may contain fluorine (F) in an amount of 250 mg/kg or less, preferably 200 mg/kg or less, more preferably 10 to 200 mg/kg. Within this range, charge capacity, resistance characteristics, and capacity characteristics may be excellent.

In the present disclosure, the fluorine (F) content may be measured using an ICP analyzer. In this case, general ICP analyzers, which are widely used in laboratories, may be used, but there is no deviation depending on the measurement devices or methods.

For example, the positive electrode active material may have an average crystallite size of 122 nm or less, preferably 115 to 122 nm, more preferably 120 to 122 nm. Within this range, as the crystallite size decreases, strain decreases and cycle cracks may be minimized, thereby increasing battery lifespan.

In the present disclosure, the average crystallite size may be measured by XRD crystal analysis, and there is no deviation depending on measuring devices or methods. Specifically, the average crystallite size may be measured by putting 5 g of positive electrode active material particles into a holder and analyzing diffraction grating generated when the particles are irradiated with X-rays. Based on the half-width of main peaks or three or more peaks, the average crystallite size may be determined. It can be seen that this corresponds to the average crystallite size of the primary particles of the positive electrode active material particles.

For example, the amount of LiOH remaining on the surface of the positive electrode active material may be 0.32 % by weight or less, preferably 0.31 % by weight or less, more preferably 0.01 to 0.31 % by weight. Within this range, charge capacity, resistance characteristics, and capacity characteristics may be excellent.

For example, the amount of Li₂CO₃ remaining on the surface of the positive electrode active material may be 0.19 % by weight or less, preferably 0.01 to 0.19 % by weight. Within this range, charge capacity, resistance characteristics, and capacity characteristics may be excellent.

For example, the total amount of LiOH and Li₂CO₃ remaining on the surface of the positive electrode active material may be 0.51 % by weight or less, preferably 0.50 % by weight or less, more preferably 0.01 to 0.50 % by weight. Within this range, charge capacity, resistance characteristics, and capacity characteristics may be excellent.

In the present disclosure, the amounts of LiOH and Li₂CO₃ remaining on the surface of the positive electrode active material may be measured using a pH titrator (T5, Mettler Toledo Co.). Specifically, 5 g of the positive electrode active material is dispersed in 100 ml of distilled water and mixed at 300 rpm for 5 minutes, and then filtering is performed to filter out an active material and obtain a filtrate. Change in pH values is measured while titrating the filtrate with a 0.1 M HCl solution. Based on the measurement result, a pH titration curve is obtained. Using the pH titration curve, the amounts of residual LiOH and Li₂CO₃ in the positive electrode active material are calculated.

In addition, the positive electrode active material of the present invention includes one or more selected from the group consisting of a lithium nickel oxide (LNO)-based positive electrode active material, a nickel·cobalt·manganese (NCM)-based positive electrode active material, a nickel·cobalt·aluminum (NCA)-based positive electrode active material, and a nickel·cobalt·manganese·aluminum (NCMA)-based positive electrode active material, includes 60 mol% or more of Ni, contains fluorine (F) in an amount of 305 mg/kg or less, and has a crystallite size of 139 nm or less. In this case, capacity characteristics and lifespan characteristics may be excellent.

The positive electrode active material may include Ni in an amount of preferably 80 mol% or more, more preferably 81 mol% or more, still more preferably 81 to 95 mol%. Within this range, charge capacity, resistance characteristics, and capacity characteristics may be excellent.

For example, the positive electrode active material may contain fluorine (F) in an amount of 305 mg/kg or less, preferably 250 mg/kg or less, more preferably 200 mg/kg or less, still more preferably 10 to 200 mg/kg. Within this range, capacity characteristics may be excellent.

For example, the positive electrode active material may have an average crystallite size of 139 nm or less, preferably 120 to 139 nm, more preferably 130 to 139 nm, still more preferably 133 to 139 nm, still more preferably 133 to 136 nm. Within this range, as the crystallite size decreases, strain decreases and cycle cracks may be minimized, thereby increasing battery lifespan.

For example, the amount of Li₂CO₃ remaining on the surface of the positive electrode active material may be 0.16 % by weight or less, preferably 0.14 % by weight or less, more preferably 0.1 % by weight or less, still more preferably 0.01 to 0.1 % by weight. Within this range, charge capacity, resistance characteristics, and capacity characteristics may be excellent.

For example, the amount of LiOH remaining on the surface of the positive electrode active material may be 0.32 % by weight or less, preferably 0.3 % by weight or less, more preferably 0.01 to 0.3 % by weight, still more preferably 0.01 to 0.28 % by weight. Within this range, charge capacity, resistance characteristics, and capacity characteristics may be excellent.

For example, the total amount of LiOH and Li₂CO₃ remaining on the surface of the positive electrode active material may be 0.45 % by weight or less, preferably 0.42 % by weight or less, more preferably 0.40 % by weight or less, still more preferably 0.01 to 0.4 % by weight. Within this range, charge capacity, resistance characteristics, and capacity characteristics may be excellent.

For example, the surface of the positive electrode active material may be coated with a metal or carbon, preferably a metal. In this case, the structural stability of the positive electrode active material may be improved without chemical and physical change of the positive electrode active material, thereby improving rate performance, lifespan characteristics, and electrochemical properties such as capacity. In addition, substitution with heterogeneous elements occurs on the surface of the positive electrode active material, and as a result, the amount of residual lithium and pH are reduced, thereby improving physicochemical properties.

The metal may include preferably one or more selected from the group consisting of B, W, Al, Ti, Mg, Ni, Co, Mn, Si, Zr, Ge, Sn, Cr, Fe, V, and Y, more preferably one or more selected from the group consisting of B, W, Al, Ti, and Mg, still more preferably boron (B), tungsten (W), or a mixture thereof, still more preferably tungsten (W) and boron (B), as a specific example, tungsten boride (WB). In this case, resistance characteristics and lifespan characteristics may be improved.

For example, based on 1 mol% of metals in the positive electrode active material before coating, the coating agent may be included in an amount of 0.001 to 0.3 mol%, preferably 0.01 to 0.3 mol%, more preferably 0.01 to 0.15 mol%, still more preferably 0.01 to 0.1 mol%, still more preferably 0.01 to 0.05 mol%. Within this range, structural stability and electrochemical performance may be improved while maintaining the intrinsic properties of the positive electrode active material.

In the surface coating, preferably, the surface may be coated with a coating agent including one or more of a metal, an organic metal, and a carbon component in a solid or liquid manner, and then may be heat-treated at 100 to 1,200 °C. In this case, structural stability and electrochemical performance may be improved while maintaining the intrinsic properties of the positive electrode active material.

The positive electrode active material may be preferably a recycled positive electrode active material. In this case, economic feasibility and productivity may be excellent.

### Method of recycling positive electrode active material

A method of recycling a positive electrode active material of the present invention includes a step of injecting oxygen into a waste positive electrode having a positive electrode active material layer including 60 mol% or more of Ni on a current collector and subjecting the waste positive electrode to oxidation heat treatment to thermally decompose a binder and a conductive material in the positive electrode active material layer to separate the current collector from the positive electrode active material layer and recover a positive electrode active material from the positive electrode active material layer; a step of first washing the recovered positive electrode active material; a step of adding a lithium precursor to the first washed positive electrode active material and performing annealing; and a step of second washing the annealed positive electrode active material. In this case, from the surface of the recycled positive electrode active material, fluorine (F) and the lithium precursor not used in the reaction may be removed. In addition, a crystallite size may be reduced. As a result, excellent charge capacity, resistance characteristics, and capacity characteristics may be achieved.

Hereinafter, each step of the method of recycling a positive electrode active material will be described in detail.

### (a) Recovering positive electrode active material from waste positive electrode

Step (a) of recovering a positive electrode active material from a waste positive electrode according to the present invention may be preferably a step of injecting oxygen into a waste positive electrode including a current collector and a positive electrode active material layer coated thereon and performing oxidation heat treatment to recover a positive electrode active material. In this case, a simple process may be implemented, and a binder, a conductive material, and a current collector may be completely removed.

The waste positive electrode may be preferably a positive electrode separated from a lithium secondary battery discarded after use, or a defective positive electrode sheet or a positive electrode scrap generated in a process of manufacturing a lithium secondary battery, more preferably a positive electrode scrap remaining after blanking a positive electrode sheet to obtain a positive electrode plate.

The positive electrode active material layer of step (a) may preferably include a positive electrode active material, a binder, and a conductive material.

For example, the positive electrode active material may include one or more selected from the group consisting of a lithium nickel oxide (LNO)-based positive electrode active material, a nickel·cobalt·manganese (NCM)-based positive electrode active material, a nickel·cobalt·aluminum (NCA)-based positive electrode active material, and a nickel·cobalt·manganese·aluminum (NCMA)-based positive electrode active material.

Preferably, the positive electrode active material may include one or more selected from the group consisting of a lithium cobalt oxide such as LiCoO₂ (hereinafter referred to as "LCO"); a lithium manganese oxide such as LiMnO₂ or LiMn₂O₄; a lithium iron phosphate compound such as LiFePO₄; a lithium nickel cobalt aluminum oxide (NCA); a lithium nickel oxide such as LiNiO₂; a nickel manganese-based lithium composite metal oxide obtained by replacing a part of nickel (Ni) with manganese (Mn) in the lithium nickel oxide; and an NCM-based lithium composite transition metal oxide obtained by replacing a part of nickel (Ni) with manganese (Mn) and cobalt (Co) in the lithium nickel oxide, and may include 60 mol% or more of Ni. More preferably, the positive electrode active material may be a nickel manganese-based lithium composite metal oxide, an NCM-based lithium composite transition metal oxide, or a mixture thereof. In this case, reversible capacity and thermal stability may be excellent.

As another specific example, the positive electrode active material may be a compound represented by Chemical Formula 1 below.

[Chemical Formula 1] LiₐNiₓMn_{y}Co_{z}M_{w}O_{2+δ}

In Chemical Formula 1, M includes one or more selected from the group consisting of B, W, Al, Ti, and Mg, 1 < a ≤ 1.1, 0 < x < 0.95, 0 < y < 0.8, 0 < z < 1.0, 0 ≤ w ≤ 0.1, -0.02 ≤ δ ≤ 0.02, and x + y + z + w = 1.

The positive electrode active material may include Ni in an amount of preferably 80 mol% or more, more preferably 81 mol% or more, still more preferably 81 to 95 mol%. Within this range, initial discharge capacity, rate performance, capacity characteristics, and resistance characteristics may be excellent.

For example, the conductive material may be a carbon-based conductive material, preferably carbon black, CNT, or a mixture thereof.

For example, the binder may be a polymer binder, preferably polyvinylidene fluoride (PVdF), acrylonitrilebutadiene rubber (NBR), or a mixture thereof, more preferably polyvinylidene fluoride.

The oxidation heat treatment temperature may be preferably 400 to 600 °C, more preferably 500 to 600 °C, still more preferably 530 to 580 °C. Within this range, since the current collector is not melt, and the binder and the carbon components in the conductive material react with oxygen to generate gases such as CO and CO₂ and then disappear, the binder and the conductive material may be completely removed without remaining.

The oxidation heat treatment time may be preferably 10 minutes to 5 hours, more preferably 30 minutes to 5 hours, still more preferably 30 minutes to 2 hours, still more preferably 30 minutes to 1 hour. Within this range, since the current collector is not melted and only a binder is removed, the positive electrode active material may be easily separated from the current collector.

In the present disclosure, the oxidation heat treatment time is time of heat treatment performed at the corresponding oxidation heat treatment temperature, and does not include time required to reach the corresponding heat treatment temperature.

For example, the oxidation heat treatment may be performed in two steps. Preferably, in the oxidation heat treatment, first heat treatment may be performed at 300 to 450 °C, and then second heat treatment may be performed at 500 to 650 °C. In this case, a simple process may be implemented, and the binder, the conductive material, and the current collector may be completely removed. In addition, fluorine (F) and residual lithium generated in the thermal decomposition process may be reduced, and a crystallite size may be reduced.

The first heat treatment temperature may be more preferably 300 to 430 °C, still more preferably 320 to 400 °C. Within this range, thermal decomposition of the binder and organic matter may occur smoothly.

The first heat treatment time may be preferably 10 minutes to 3 hours, more preferably 20 minutes to 160 minutes. Within this range, since a current collector is not melted and only a binder is removed, a positive electrode active material may be easily separated from the current collector.

The second heat treatment temperature may be more preferably 510 to 630 °C, still more preferably 520 to 630 °C. Within this range, the binder and the conductive material may be completely removed, fluorine (F) and residual lithium generated during the thermal decomposition process may be reduced, and a crystallite size may be reduced.

The second heat treatment time may be preferably 10 minutes to 2 hours, more preferably 20 minutes to 100 minutes. Within this range, since a current collector is not melted and only a binder is removed, a positive electrode active material may be easily separated from the current collector.

For example, a sum of the first heat treatment time and the second heat treatment time may be 20 minutes to 5 hours, preferably 30 minutes to 4 hours. Within this range, since a current collector is not melted and only a binder is removed, a positive electrode active material may be easily separated from the current collector. In addition, fluorine (F) and residual lithium generated during the thermal decomposition process may be reduced, and a crystallite size may be reduced.

For example, in the oxidation heat treatment, oxygen may have a purity of 59 % or more, preferably 70 % or more, more preferably 80 % or more, still more preferably 90 % or more, still more preferably 90 to 99 %. Within this range, the binder and the conductive material may be removed without remaining, the stability of Ni in the active material may be increased, and a crystallite size may be reduced.

The purity% of oxygen may be volume% or mol%.

The purity of oxygen of the present description may be measured using a measurement method commonly used in the art to which the present invention pertains, without particular limitation.

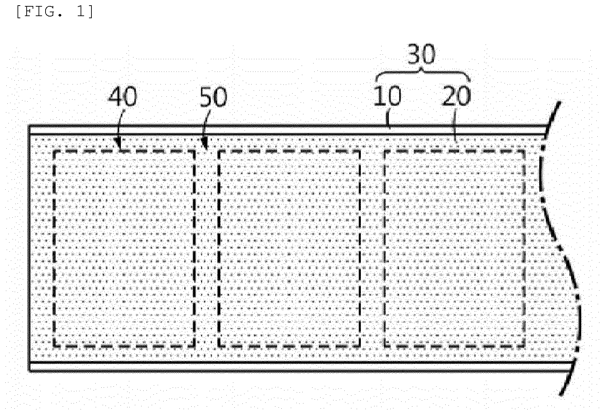

FIG. 1 below shows positive electrode scraps discarded after cutting a positive electrode sheet to obtain positive electrode plates.

Referring to FIG. 1, aluminum foil 10, which is a long sheet-shaped positive electrode current collector, is coated with a positive electrode active material layer 20 including a positive electrode active material, a conductive material, and a binder to obtain a positive electrode sheet 30. Then, a positive electrode plate 40 is obtained by blanking the positive electrode sheet 30 to a certain size. At this time, portions remaining after the blanking are positive electrode scraps 50. The blanking is a means for cutting the positive electrode sheet.

In addition, the positive electrode active material layer 20 is formed by coating the aluminum foil 10 with slurry obtained by mixing a positive electrode active material, a conductive material, a binder, and a solvent. Since the slurry is very sensitive to environmental factors such as temperature, it is very difficult to determine the coating conditions. Accordingly, waste positive electrode sheets are generated until the conditions for manufacturing the positive electrode sheet 30 of desired quality are determined through a predetermined test.

For reference, in the following examples, positive electrode scraps were used as a waste positive electrode.

### (b) First washing recovered positive electrode active material

The method of recycling a positive electrode active material of the present invention includes step (b) of first washing the recovered positive electrode active material. In this case, metal fluorides such as LiF remaining on the surface of the recycled positive electrode active material may be removed, and the surface may be modified.

During the oxidation heat treatment, CO₂ and H₂O in the binder and conductive material in the active material may react with lithium on the surface of the active material to form Li₂CO₃ and LiOH. Fluorine (F) present in a binder such as PVdF may react with metal elements constituting the positive electrode active material to form LiF or metal fluorides. When LiF or metal fluorides remain, the battery characteristics deteriorate when the active material is reused.

For example, in the first washing, as the washing liquid, water or a basic aqueous lithium compound solution may be used. More preferably, water may be used as the washing liquid.

The water may be preferably distilled water or deionized water, more preferably distilled water. In this case, metal fluorides such as LiF remaining on the surface of the positive electrode active material may be removed, and an excellent surface modification effect may be obtained.

The basic aqueous lithium compound solution may include a lithium compound in an amount of preferably greater than 0 % by weight and 15 % by weight or less, more preferably greater than 0 % by weight and 10 % by weight or less. In this case, metal fluorides such as LiF remaining on the surface of the positive electrode active material may be removed, and the surface may be modified. In addition, elution of transition metals present in the positive electrode active material may be prevented, and lithium that may be eluted during the washing process may be supplemented. When the lithium compound is included in an amount exceeding the range, an excess of LiOH may remain on the surface of the active material even after washing, which may affect the subsequent annealing process.

For example, the lithium compound may be LiOH, LiNO₃, or a mixture thereof, preferably LiOH. In this case, fluorine (F) and a lithium precursor not used in the reaction on the surface of the positive electrode active material may be removed.

For example, in the first washing, the weight ratio of the recovered positive electrode active material to the washing liquid may be 1:1 to 1:40, preferably 1:1 to 1:35, more preferably 1:1 to 1:30, still more preferably 1:1 to 1:20. Within this range, metal fluorides such as LiF may be efficiently removed.

For example, the first washing may be performed by immersing the recovered positive electrode active material in the washing liquid. For example, the immersing may be performed for a week, preferably within a day, more preferably within 1 hour, still more preferably for 10 minutes to 50 minutes. When the immersing is performed for more than a week, capacity may decrease due to excessive elution of lithium.

Preferably, the first washing may be performed by stirring while immersing the positive electrode active material in the washing liquid. In this case, as the washing process is performed quickly, elution of lithium may be suppressed and process hours are reduced.

The first washing may preferably include a step of filtering the positive electrode active material and the washing liquid after washing and a step of drying a solid positive electrode active material obtained after the filtration. In this case, metal fluorides such as LiF may be efficiently removed.

The filtration may preferably be vacuum filtration using a filter.

The drying may be performed at preferably 100 to 500 °C, more preferably 120 to 400 °C, still more preferably 120 to 300 °C, still more preferably 120 to 200 °C.

The drying may preferably be carried out under vacuum.

In the present disclosure, vacuum drying methods commonly practiced in the art to which the present invention pertains may be used in the present invention without particular limitation.

### (c) Adding lithium precursor to first washed positive electrode active material and performing annealing

The method of recycling a positive electrode active material of the present invention includes step (c) of adding a lithium precursor to the first washed positive electrode active material and performing annealing. In this case, the crystal structure of the recycled positive electrode active material may be restored or improved to a level similar to that of a fresh positive electrode active material.

The annealing step (c) may be a step of adding a lithium precursor to the first washed positive electrode active material and performing annealing at 400 to 1,000 °C in air or under an oxygen (O₂) atmosphere, preferably in air. In this case, by improving crystallinity through increase in crystallinity or recovery of a crystal structure, the battery characteristics of a recycled positive electrode active material may be improved.

The lithium precursor may include preferably one or more selected from the group consisting of LiOH, Li₂CO₃, LiNO₃, and Li₂O.

The lithium precursor may be preferably added in an amount corresponding to the reduced amount of lithium based on a molar ratio of lithium in the positive electrode active material of step (a) based on the amount of lithium in the recovered positive electrode active material. More preferably, the lithium precursor may be added in an amount corresponding to a molar ratio of lithium of 0.0001 to 0.2 based on the molar ratio of lithium in the positive electrode active material of step (a). Within this range, insufficient lithium in the recycled positive electrode active material may be supplemented, and thus crystallinity may be increased or a crystal structure may be recovered, thereby improving crystallinity. As a result, the battery characteristics of the recycled positive electrode active material may be improved.

The lithium precursor may be added in an amount corresponding to preferably 1 to 40 mol%, more preferably 1 to 15 mol%, still more preferably 1 to 10 mol% based on 100 mol% in total of lithium in a positive electrode active material as a raw material used to form the positive electrode active material layer. Within this range, since a residual precursor that causes an increase in the resistance of the recycled positive electrode active material is not left, battery characteristics may be improved.

The annealing temperature may be adjusted within a limited range according to the melting point of the lithium precursor. For example, in the case of LiCO₃, the melting point thereof is 723 °C, and thus annealing may be performed at preferably 700 to 900 °C, more preferably 710 to 780 °C. In the case of LiOH, the melting point thereof is 462 °C, and thus annealing may be performed at preferably 400 to 600 °C, more preferably 450 to 480 °C. Within this range, a crystal structure may be recovered, and thus the rate performance of a battery may be excellent.

The annealing temperature is preferably a temperature exceeding the melting point of the lithium precursor. However, when the annealing temperature exceeds 1,000 °C, thermal decomposition of the positive electrode active material may occur, resulting in deterioration of battery performance. Accordingly, the annealing temperature is preferably 1,000 °C or lower.

In the annealing step (c), as a method of adding a lithium precursor to the first washed positive electrode active material, the washed positive electrode active material may be dried, and then a solid or liquid lithium precursor may be added to thereto. As another example, after adding a lithium precursor solution to the washed positive electrode active material, spray drying may be performed so that drying and lithium precursor addition are performed in one step. In this case, particle agglomeration due to drying may be reduced, and the process of mixing a solid phase lithium precursor may be omitted. In addition, a product in the form of powder rather than a lump may be obtained by spray drying.

For example, the lithium precursor solution may be prepared using a lithium compound that is soluble in an aqueous solution or an organic solvent.

### (d) Second washing annealed positive electrode active material

The method of recycling a positive electrode active material of the present invention includes step (d) of second washing the annealed positive electrode active material. In this case, after adding the lithium precursor, the lithium precursor that does not participate in the reaction and exists in the form of LiOH or Li₂CO₃ on the surface of the positive electrode active material may be removed. As a result, in the subsequent process, degradation of battery performance and generation of gas due to the reaction between the residual lithium precursor and an electrolyte solution may be prevented.

For example, the second washing may be performed using water, preferably distilled water or deionized water as a washing liquid. In this case, lithium precursors such as LiOH and Li₂CO₃ remaining due to lithium added in excess in the annealing step (c) may be effectively removed.

The second washing may preferably include a step of mixing the annealed positive electrode active material and the washing liquid in a weight ratio of 1:1 to 1:20 and performing filtration and a step of drying a solid positive electrode active material obtained after the filtration. In this case, lithium precursors such as LiOH and Li₂CO₃ remaining due to lithium added in excess in the annealing step (c) may be effectively removed.

The annealed active material and the washing liquid may be mixed in a weight ratio of preferably 1:1 to 1:20, more preferably 1:1 to 1:15, still more preferably 1:1 to 1:10, still more preferably 1:1 to 1:5. In this case, lithium precursors such as LiOH and Li₂CO₃ remaining due to lithium added in excess in the annealing step (c) may be effectively removed.

The second washing may include a step of mixing the annealed positive electrode active material and the washing liquid and performing filtration and a step of drying a solid positive electrode active material obtained after the filtration. In this case, excellent charge capacity, resistance characteristics, and capacity characteristics may be achieved.

### (e) Coating surface of second washed positive electrode active material to obtain reusable positive electrode active material

The method of recycling a positive electrode active material of the present invention includes step (e) of coating the surface of the second washed positive electrode active material to obtain a reusable positive electrode active material. In this case, structural stability and electrochemical performance may be improved while maintaining the intrinsic properties of the positive electrode active material.

In the surface coating, preferably, the surface may be coated with a coating agent including one or more of a metal, an organic metal, and a carbon component in a solid or liquid manner, and then may be heat-treated at 100 to 1,200 °C. In this case, structural stability and electrochemical performance may be improved while maintaining the intrinsic properties of the positive electrode active material.

The coating agent including a metal may be preferably a coating agent including one or more selected from the group consisting of B, W, Al, Ti, Mg, Ni, Co, Mn, Si, Zr, Ge, Sn, Cr, Fe, V, and Y, more preferably a coating agent including one or more selected from the group consisting of B, W, Al, Ti, and Mg, still more preferably a coating agent including boron (B), tungsten (W), or a mixture thereof, still more preferably a coating agent including tungsten (W) and boron (B), as a specific example, a coating agent including tungsten boride (WB). In this case, resistance characteristics and lifespan characteristics may be improved.

For example, the coating agent including a metal may be an oxide or an acid including the metal as an element in the molecule thereof.

As the coating agent including an organic metal, coating agents including an organic metal compound containing a metal commonly used in the art to which the present invention pertains may be used without particular limitation. As a specific example, metal alkoxides may be used.

As the coating agent including a carbon component, coating agents including a carbon component commonly used in the art to which the present invention pertains may be used without particular limitation. As a specific example, sugars such as sucrose may be used.

For example, based on components coated on the surface of the positive electrode active material excluding a solvent, based on 1 mol% of the metal in the positive electrode active material before coating, the coating agent may be included in an amount of 0.001 to 0.3 mol%, preferably 0.01 to 0.3 mol%, more preferably 0.01 to 0.15 mol%, still more preferably 0.01 to 0.1 mol%, still more preferably 0.01 to 0.05 mol%. Within this range, structural stability and electrochemical performance may be improved while maintaining the intrinsic properties of the positive electrode active material.

The heat treatment temperature may preferably 100 to 1,000 °C, more preferably 200 to 1,000 °C, still more preferably 200 to 500 °C. Within this range, performance degradation due to thermal decomposition of the positive electrode active material may be prevented, and structural stability and electrochemical performance may be improved.

The heat treatment time may be preferably 1 to 16 hours, more preferably 3 to 7 hours. Within this range, structural stability and electrochemical performance may be improved while maintaining the intrinsic properties of the positive electrode active material.

Coating methods commonly used in the art to which the present invention pertains may be used as the coating method of the present invention without particular limitation. For example, a liquid method of mixing a positive electrode active material and a liquid coating agent, a mechanochemical method using the high mechanical energy of ball milling, a fluid bed coating method, a spray drying method, a precipitation method of precipitating a coating agent onto the surface of a positive electrode active material in an aqueous solution, a method using reaction between a vapor phase coating agent and a positive electrode active material, or sputtering may be used.

For example, the metal, organic metal, and carbon component may have a spherical shape, a plate shape, a square shape, or a needle shape. For example, such a shape may be controlled by changing process conditions in the preparation process. Each shape is not particularly limited as long as the shape follows a definition commonly accepted in the art to which the present invention pertains.

The coating agent may have preferably an average diameter of 1 to 1,000 nm and a specific surface area of 10 to 100 m²/g, more preferably an average diameter of 10 to 100 nm and a specific surface area of 20 to 100 m²/g. Within this range, the coating agent may be uniformly adhered to the surface of the positive electrode active material, thereby improving the structural stability of the positive electrode active material. Thus, reduction of the lifespan of the positive electrode active material and degradation of the electrochemical performance thereof due to lattice deformation or collapse of a crystal structure may be prevented.

In the present disclosure, the average diameter may be measured by a measuring method commonly used in the art to which the present invention pertains. For example, the average diameter may be measured by a laser diffraction method. Specifically, positive electrode active material particles are dispersed in a dispersion medium, the dispersed particles are placed in a commercially available laser diffraction particle size measuring device such as Microtrac MT 3000, and the particles are irradiated with an ultrasonic wave of about 28 kHz with an output of 60 W. Then, an average particle diameter (D50) is calculated based on 50 % of the particle size distribution in the measuring device.

In the present disclosure, the specific surface area may be measured by a measuring method commonly used in the art to which the present invention pertains. For example, the specific surface area may be measured by Brunauer-Emmett-Teller (BET) method. Specifically, the specific surface area may be calculated based on the amount of nitrogen gas adsorbed under liquid nitrogen temperature (77 K) using BELSORP-mino II manufactured by BEL Japan Co.

For example, the positive electrode active material according to the method of recycling a positive electrode active material of the present invention may contain fluorine (F) in an amount of 250 mg/kg or less, preferably 200 mg/kg or less, more preferably 10 to 200 mg/kg. Within this range, charge capacity, resistance characteristics, and capacity characteristics may be excellent.

For example, the amount of LiOH remaining on the surface of the positive electrode active material may be 0.32 % by weight or less, preferably 0.31 % by weight or less, more preferably 0.01 to 0.31 % by weight. Within this range, charge capacity, resistance characteristics, and capacity characteristics may be excellent.

For example, the amount of Li₂CO₃ remaining on the surface of the positive electrode active material may be 0.19 % by weight or less, preferably 0.01 to 0.19 % by weight. Within this range, charge capacity, resistance characteristics, and capacity characteristics may be excellent.

For example, the total amount of LiOH and Li₂CO₃ remaining on the surface of the positive electrode active material may be 0.51 % by weight or less, preferably 0.50 % by weight or less, more preferably 0.01 to 0.50 % by weight. Within this range, charge capacity, resistance characteristics, and capacity characteristics may be excellent.

For example, the positive electrode active material may have an average crystallite size of 122 nm or less, preferably 115 to 122 nm, more preferably 120 to 122 nm. Within this range, as the crystallite size decreases, strain decreases and cycle cracks may be minimized, thereby increasing battery lifespan.

In addition, for example, the positive electrode active material according to the method of recycling a positive electrode active material of the present invention may contain fluorine (F) in an amount of 305 mg/kg or less, preferably 250 mg/kg or less, more preferably 200 mg/kg or less, still more preferably 10 to 200 mg/kg. Within this range, capacity characteristics may be excellent.

For example, the amount of Li₂CO₃ remaining on the surface of the positive electrode active material may be 0.16 % by weight or less, preferably 0.14 % by weight or less, more preferably 0.10 % by weight or less, still more preferably 0.01 to 0.10 % by weight. Within this range, charge capacity, resistance characteristics, and capacity characteristics may be excellent.

For example, the amount of LiOH remaining on the surface of the positive electrode active material may be 0.32 % by weight or less, preferably 0.30 % by weight or less, more preferably 0.01 to 0.30 % by weight, still more preferably 0.01 to 0.28 % by weight. Within this range, charge capacity, resistance characteristics, and capacity characteristics may be excellent.

For example, the total amount of LiOH and Li₂CO₃ remaining on the surface of the positive electrode active material may be 0.45 % by weight or less, preferably 0.42 % by weight or less, more preferably 0.40 % by weight or less, still more preferably 0.01 to 0.40 % by weight. Within this range, charge capacity, resistance characteristics, and capacity characteristics may be excellent.

For example, the positive electrode active material may have an average crystallite size of 139 nm or less, preferably 120 to 139 nm, more preferably 130 to 139 nm, still more preferably 133 to 139 nm, still more preferably 133 to 136 nm. Within this range, as the crystallite size decreases, strain decreases and cycle cracks may be minimized, thereby increasing battery lifespan.

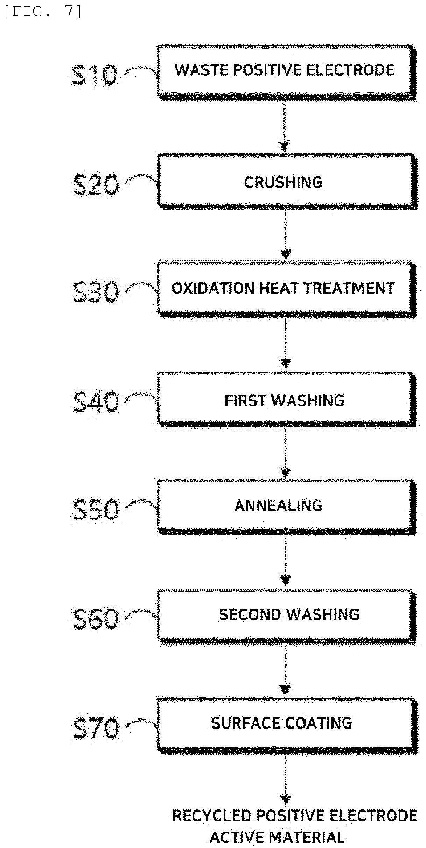

FIG. 7 below is a flowchart for explaining a process of recycling a positive electrode active material according to one embodiment of the present invention.

Referring to FIG. 7, first, positive electrode scraps are prepared using waste positive electrodes (step S10). For example, slurry is obtained by adding N-methyl pyrrolidone (NMP) to an NCM-based lithium composite transition metal oxide, carbon black, and polyvinylidene fluoride and mixing these components. Then, aluminum foil is coated with the slurry and dried in a vacuum oven at about 120 °C to manufacture a positive electrode sheet. Then, a positive electrode plate is obtained by blanking the positive electrode sheet to a certain size. At this time, portions remaining after blanking are positive electrode scraps.

According to the present invention, a waste positive electrode using a positive electrode active material containing 60 mol% or more of Ni, preferably 80 mol% or more of Ni, more preferably 81 mol% or more of Ni, still more preferably 81 to 95 mol% of NI may be effectively used.

In the positive electrode scraps, a positive electrode active material layer is formed on aluminum foil. After a solvent is volatilized, the positive electrode active material layer has a structure in which a positive electrode active material and a conductive material are bonded by a binder. Accordingly, when the binder is removed, the positive electrode active material is separated from the aluminum foil.

Next, the prepared positive electrode scraps are crushed to an appropriate size (step S20). Here, the crushing involves cutting or shredding the positive electrode scraps into easy-to-handle sizes. As a specific example, the crushed positive electrode scraps may have a size of 1 cm × 1 cm. For example, the crushing may be performed using various dry crushing equipment such as a hand-mill, a pin-mill, a disk-mill, a cutting-mill, and a hammer-mill. In addition, to increase productivity, the crushing may be performed using a high-speed cutter.

Preferably, in consideration of equipment used in handling positive electrode scraps and subsequent processes, whether to perform the crushing, the size of pieces, and the like may be determined. For example, when equipment capable of continuous processing is used, since high fluidity is required, positive electrode scraps must be crushed into small pieces.

Next, oxygen is injected into the positive electrode scraps, and oxidation heat treatment is performed to recover a positive electrode active material (step S30). Here, the heat treatment is performed to thermally decompose a binder in an active material layer.

The oxidation heat treatment is preferably performed in oxygen having a purity of 80 % or more, more preferably a purity of 90 % or more. In this case, Ni stability in a waste positive electrode using a high-nickel (Ni) positive electrode material may be secured, and a binder and a conductive material may be completely removed. When the heat treatment is performed in a reducing gas or under an inert gas atmosphere, the binder and the conductive material are carbonized without being thermally decomposed. In this case, carbon components remain on the surface of the positive electrode active material, and the performance of a recycled positive electrode active material is degraded. However, when oxygen is introduced and the oxidation heat treatment is performed, carbon components in the binder and conductive material react with oxygen to generate gases such as CO and CO₂ and disappear. As a result, the binder and the conductive material may be completely removed.

The oxidation heat treatment is performed at preferably 300 to 650 °C, as a specific example, 590 °C. When the heat treatment is performed at a temperature of less than 300 °C, it is difficult to remove the binder, so the current collector may not be separated. When the heat treatment is performed at a temperature of exceeding 650 °C, since the current collector melts, the current collector may not be separated.

The oxidation heat treatment is performed at a temperature-increasing rate of preferably 1 to 20 °C/min, more preferably 3 to 10 °C/min, as a specific example, 5 °C/min. Within this range, heat treatment may be performed without applying excessive force to heat treatment equipment, and application of thermal shock to positive electrode scraps may be prevented.

For example, the oxidation heat treatment may be performed for a time sufficient to thermally decompose the binder, preferably for 30 minutes or more, more preferably for 30 minutes to 5 hours, as a specific example, within 30 minutes. Within this range, the binder may be sufficiently thermally decomposed, and thermal decomposition efficiency may be excellent.

In the present disclosure, the high-nickel positive electrode active material refers to a positive electrode active material containing 60 mol% or more of nickel.

The oxidation heat treatment step may be preferably performed in two steps. Specifically, first oxidation heat treatment may be performed at 300 to 430 °C, and then second heat treatment may be performed at 510 to 630 °C. In this case, the two-step heat treatment may reduce fluorine (F) and residual lithium generated in the thermal decomposition process, and may reduce a crystallite size.

More preferably, the first oxidation heat treatment may be performed at 320 to 400 °C.

The first heat treatment may be performed for preferably 10 minutes to 3 hours, more preferably 20 minutes to 160 minutes.

More preferably, the second oxidation heat treatment may be performed at 520 to 630 °C. Within this range, thermal decomposition of the binder and the conductive material may be sufficiently achieved, thereby reducing fluorine (F) and residual lithium generated in the thermal decomposition process and reducing a crystallite size.

The second heat treatment may be performed for preferably 10 minutes to 2 hours, more preferably 20 minutes to 100 minutes. Within this range, since a current collector is not melted and only a binder is removed, a positive electrode active material may be easily separated from the current collector.

The oxidation heat treatment may be performed at a temperature-increasing rate of preferably 1 to 20 °C/min, more preferably 3 to 10 °C/min, as a specific example, 5 °C/min. Within this range, heat treatment may be performed without applying excessive force to heat treatment equipment, and application of thermal shock to positive electrode scraps may be prevented.

The oxidation heat treatment may be performed using various types of furnaces, e.g., a box-type furnace. In addition, in consideration of productivity, the heat treatment may be performed using a rotary kiln capable of continuous treatment.

After the oxidation heat treatment, slow cooling or rapid cooling may be performed in the atmosphere.

Next, the recovered positive electrode active material is first washed (step S40).

Since fluorine (F) and lithium remain on the surface of the recovered positive electrode active material in the oxidation heat treatment step S30, a washing process to remove fluorine (F) and lithium is required.

In the first washing step, the recovered positive electrode active material may be washed using water or a basic aqueous lithium compound solution, preferably water as a washing liquid.

The water may be preferably distilled water or deionized water. In this case, metal fluorides such as LiF may be removed, and surface modification may be achieved.

The basic aqueous lithium compound solution may include a lithium compound in an amount of greater than 0 % by weight and 15 % by weight or less, preferably greater than 0 % by weight and 10 % by weight or less. In this case, metal fluorides such as LiF remaining on the surface of the recycled positive electrode active material may be removed, and surface modification may be achieved. When the lithium compound is included in an amount exceeding 15 % by weight, even after washing, an excess of lithium compounds such as LiOH and LiNO₃ may be remained on the surface of the positive electrode active material, which may affect the subsequent annealing process.

Specifically, the lithium compound may be LiOH.

The first washing may be performed by immersing the recovered active material in a washing liquid. After immersing, washing may be performed within a week, preferably within a day, still more preferably within 1 hour. When washing for more than a week, there is a possibility of capacity degradation due to excessive elution of lithium. Accordingly, washing is preferably performed within 1 hour. The first washing includes immersing the active material in the washing liquid and stirring while immersing the active material in the washing liquid. It is preferable to combine stirring and immersing. When an aqueous lithium compound solution is used as a washing liquid, when only immersing is performed without stirring, the washing process may be slowed down, and elution of lithium may be caused. When immersing and stirring are combined, process time may be significantly reduced. Thus, stirring and immersing are preferably performed at the same time.

After the first washing, filtering and drying in air in an oven (convection type) may be further performed.

In the first washing, the weight ratio of the recovered positive electrode active material to the washing liquid may be 1:1 to 1:40, preferably 1:1 to 1:35, more preferably 1:1 to 1:30. Within this range, metal fluorides such as LiF may be efficiently removed.

The first washing may preferably include a step of filtering the positive electrode active material and the washing liquid after washing and a step of drying a solid positive electrode active material obtained after the filtration.

The filtration is preferably vacuum filtration using a filter, and the drying is vacuum drying at 120 to 140 °C.

Next, a lithium precursor is added to the first washed positive electrode active material, and annealing is performed (step S50).

In the annealing step S50, annealing should be performed after adding a lithium precursor to the first washed positive electrode active material. In this case, lithium loss in the positive electrode active material may occur during the previous steps S30 and S40, and step S50 compensates for such loss of lithium.

In addition, in step S50, through annealing, the crystal structure of the recycled active material is restored or improved to a level similar to that of a fresh active material.

During the previous steps S30 and S40, a deformation structure may appear on the surface of the positive electrode active material. As a specific example, in an active material, which is an NCM-based lithium composite transition metal oxide, due to rock salting of Ni ([NiCO₃·2Ni(OH)₂)H₂O]) by moisture in step S40, a spinel structure may be formed. When a battery is manufactured in this state, battery characteristics such as capacity may be degraded. In the present disclosure, the crystal structure is recovered through step S50. As a specific example, a positive electrode active material, which is an NCM-based lithium composite transition metal oxide, is restored to a hexagonal structure. Accordingly, the initial characteristics of the positive electrode active material may be restored or improved to a level similar to those of a fresh positive electrode active material.

The lithium precursor of step S50 may include one or more of LiOH, Li₂CO₃, LiNO₃, and Li₂O.

As a method of adding a lithium precursor to the first washed positive electrode active material, the washed positive electrode active material may be dried, and then a solid or liquid lithium precursor may be added to thereto. As another example, after adding a lithium precursor solution to the washed positive electrode active material, spray drying may be performed so that drying and lithium precursor addition are performed in one step. At this time, a lithium precursor solution may be prepared by using a lithium compound that is soluble in an aqueous solution or an organic solvent.

When drying is performed immediately in an oven after the surface modification process by the first washing, positive electrode active material particles may agglomerate to form lumps. To mix the agglomerated particles and the lithium precursor, a process of grinding the lumps is required. As a result, the process becomes complicated and a continuous process may be difficult. In particular, in the case of the NCM-based positive electrode active material, when the lithium precursor and the powder are mixed and milling is performed in the presence of moisture, the positive electrode active material absorbs moisture and aggregation occurs severely. Accordingly, after the first washing, when the positive electrode active material is mixed with and dispersed in the lithium precursor solution and spray-dried, particle aggregation due to drying may be prevented, and the process of mixing the solid lithium precursor may be omitted. That is, powder rather than lumps may be produced by spray drying.

During spray drying, as the lithium precursor solution is dried immediately after spraying, the surface of the positive electrode active material is coated with the lithium precursor component, or the lithium precursor component contacts the surface of the positive electrode active material. At this time, when drying the lithium precursor solution as a solvent, the particles are agglomerated by capillary force, and the particle size may be adjusted. In the case of positive electrode scraps made of electrodes, the particles on the surface may be pressed and cracked or broken during a rolling process. Particularly, compared to LCO, an NCM-based positive electrode active material has severe particle splitting due to rolling during electrode formation. Accordingly, compared to a fresh positive electrode active material, the recovered positive electrode active material contains many small particles, and the particle size may become uneven.

In addition, an NCM-based active material includes large particles (secondary particles) formed by gathering primary particles having a size of tens to hundreds of nanometers. In the case of a positive electrode made of such an active material, during a rolling process to control the porosity in the electrode, secondary particles are cleaved and converted into primary particles or small particles having a larger size than the primary particles.

Since the specific surface area of the active material increases as the number of particles broken by rolling increases, in the case of recycled active materials obtained from rolled electrodes, when reused, slurry properties, electrode adhesion, and electrode performance may be adversely affected.

As described above, through the spray drying step, the surface of the positive electrode active material is coated with the lithium precursor, and the particles of the positive electrode active material are controlled. Since lithium precursor addition, granulation, and drying are performed in one step, the effect of process simplification may be obtained. In particular, spray drying is not a means for simply obtaining an active material, but a means for re-granulating particles that have been previously used and broken by rolling.

In addition, since the washed positive electrode active material particles are mixed with and dispersed in a lithium precursor solution of a certain concentration, washing and spray drying may be performed continuously. Thus, in the case of the method of recycling a positive electrode active material according to embodiments of the present invention, the processes may be performed continuously, and lithium precursor coating, drying, and granulation (in other words, particle readjustment) may be performed simultaneously in one step.

In addition, loss of lithium in the positive electrode active material occurs during preceding steps S30 and S40. In step S50, the loss amount of lithium is supplemented. In addition, during the preceding steps, a deformed structure (e.g., Co₃O₄ in the case of an LCO active material) may be formed on the surface of the positive electrode active material. In step S50, the crystal structure of the positive electrode active material may be recovered through annealing, thereby improving the battery characteristics of a recycled positive electrode active material, or restoring the battery characteristics of the recycled positive electrode active material to the level of battery characteristics of a fresh positive electrode active material. Here, "fresh" is a concept opposite to "recycling", a fresh material means that the material was made for the first time, and the fresh material is the same word as "raw material" used in the examples.

As a specific example, LiOH is used as the lithium precursor.

Based on the molar ratio of lithium to other metals in a fresh positive electrode active material contained in the positive electrode active material layer, the lithium precursor is preferably added in a minimum amount corresponding to the lost lithium molar ratio. When an excess of lithium precursor is added relative to the amount of lithium lost, the unreacted lithium precursor may remain in a recycled positive electrode active material, which increases resistance. Accordingly, an appropriate amount of the lithium precursor needs to be added. For example, when the molar ratio of lithium to other metals in a fresh positive electrode active material is 1, the lithium precursor may be added in an amount such that lithium is in a molar ratio of 0.001 to 0.4, preferably an amount such that lithium is in a molar ratio of 0.01 to 0.2.

As a specific example, when the lithium precursor is added at a molar ratio of 0.09 to 0.1 (based on lithium metal), which is a loss ratio relative to a lithium content in a fresh positive electrode active material, based on ICP analysis results, the capacity may be increased to a level equivalent to that of the fresh positive electrode active material. Here, the ICP analysis results have an error value of about ±0.02.

Specifically, based on 100 mol% in total of lithium in a positive electrode active material used as a raw material when forming the positive electrode active material layer, the lithium precursor may be added in an amount corresponding to preferably 1 mol% to 40 mol% of lithium, more preferably 1 to 15 mol% of lithium, still more preferably 1 to 10 mol% of lithium.

For example, the annealing may be performed in air at 400 to 1,000 °C, preferably at 600 to 900 °C. In this case, the temperature should be determined within a limited range according to the type of the lithium precursor.

The annealing temperature is preferably a temperature exceeding the melting point of the lithium precursor. However, since performance degradation occurs due to thermal decomposition of the positive electrode active material at a temperature exceeding 1,000 °C, the annealing temperature should not exceed 1,000 °C. When Li₂CO₃ is used as the lithium precursor, the annealing temperature is preferably 700 to 900 °C, more preferably 710 to 780°C, most preferably 750 to 780 °C. In addition, when LiOH is used as the lithium precursor, the annealing temperature is preferably 400 to 600 °C, more preferably 450 to 480 °C, most preferably 470 to 480 °C.

For example, the annealing time is preferably 1 to 15 hours, more preferably 4 to 6 hours. When the annealing time is long, a crystal structure may be sufficiently recovered, but even long-term annealing does not significantly affect performance. In this case, the same or similar equipment as in step S30 of performing heat treatment may be used as the annealing equipment.

Next, the annealed positive electrode active material is second washed (step S60).

Since a lithium precursor not used in the reaction in the annealing step S50 remains in the form of LiOH or Li₂CO₃ on the surface of the positive electrode active material, a residual lithium removal process is required to remove the residual lithium. In particular, a high-nickel (Ni) positive electrode active material requires an excess of Li due to the cation mixing phenomenon, which promotes retention of lithium impurities such as lithium carbonate (Li₂CO₃) on the surface. Since these impurities react with an electrolyte solution to degrade battery performance and generate gas, the impurities must be completely removed.

In the second washing, distilled water may be preferably used as the washing liquid. In this case, safety and economic feasibility may be secured, and elution of transition metals contained in the positive electrode active material may be prevented.

The washing may include a step of mixing the annealed positive electrode active material and the washing liquid in a weight ratio of preferably 1:1 to 1:10, more preferably 1:1 to 1:5 and performing filtration and a step of drying a solid positive electrode active material obtained after the filtration. In this case, lithium precursors such as LiOH and Li₂CO₃ remaining due to an excess of lithium added in step S50 may be effectively removed.

Mixing the annealed positive electrode active material and distilled water is preferably performed by stirring. The stirring is not particularly limited, and is mechanical stirring or ultrasonic stirring.

The filtration is preferably vacuum filtration using a filter, and the drying is vacuum drying at 120 to 140 °C.

Next, as an optional step, the surface of the washed positive electrode active material may be coated (step S70).

For example, in the surface coating, the surface is coated with a coating agent containing metals, organic metals, or carbon in a solid or liquid phase and heat-treated. When the heat treatment temperature is too low, formation of a desired surface protection layer by the dissimilar metals may not occur. When the heat treatment temperature is high, due to thermal decomposition of the positive electrode active material, battery performance may deteriorate.

Specifically, when the washed positive electrode active material is coated with a metal oxide such as B, W, and B-W or an acid and heat-treated, a surface protection layer such as a lithium boron oxide layer is formed on the surface of the positive electrode active material.

The surface coating may be performed using a solid-phase or liquid-phase method, as a specific example, mixing, milling, spray drying, or grinding.

When the molar ratio of lithium to other metals in the positive electrode active material in the annealing step S50 is 1:1, in the surface coating step S70, lithium in the positive electrode active material reacts with the coating agent, and the molar ratio of lithium to other metal in the positive electrode active material is less than 1:1. In this case, the capacity of a battery containing the recycled positive electrode active material may not be fully (up to 100 %) expressed. However, in annealing step S50, when an excess of the lithium precursor is added so that lithium is contained in a greater molar ratio of 0.0001 to 0.1 compared to other metals in the positive electrode active material, in the surface coating step S70, a surface protection layer is formed, and the molar ratio of lithium to other metals in the positive electrode active material becomes 1:1, thereby preventing battery capacity degradation.

### Secondary battery

A secondary battery of the present invention includes the positive electrode active material. In this case, fluorine (F) and a lithium precursor not used in the reaction on the surface of the positive electrode active material may be removed, and a crystallite size may be reduced, thereby improving charge capacity, resistance characteristics, and capacity characteristics. In addition, since acids and organic solvents are not used in the process of recovering and recycling a positive electrode active material, eco-friendliness may be secured. In particular, since an initial washing process is omitted, economic feasibility and productivity may be excellent.

Description of the secondary battery of the present invention may include all of the description of the positive electrode active material and the method of recycling the positive electrode active material described above, and thus repeated description is omitted in this specification.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

### [Examples]

### Example 1

After blanking a positive electrode plate, discarded positive electrode scraps (current collector: aluminum foil, positive electrode active material: NCM-based lithium composite transition metal oxide (nickel content: 85 mol%)) were crushed, oxygen having a purity of 95 % was injected into the crushed scraps, and then oxidation heat treatment was performed at 590 °C for 30 minutes to remove a binder and a conductive material, separate a current collector and a positive electrode active material, and recover the positive electrode active material. At this time, the temperature was increased to the heat treatment temperature at a temperature-increasing rate of 5 °C/min, and oxygen (O₂) was supplied at a rate of 10 L/min.

First washing was performed by stirring while immersing the recovered positive electrode active material in distilled water. At this time, the weight ratio of the recovered positive electrode active material to distilled water was set to 1:30, stirring was performed at 500 rpm for 10 minutes, and then vacuum filtration using a filter was performed to elute only the active material. In the first washed positive electrode active material, based on 1 mol of lithium in the positive electrode active material, 0.11 mol of lithium was reduced compared to the raw material.

The first washed positive electrode active material was dried at 100 °C overnight, LiOH as a lithium precursor was added thereto, and annealing was performed at 750 °C for 5 hours in air. At this time, air was supplied at a rate of 3 L/min. Based on 100 mol% in total of lithium in the positive electrode active material as a raw material, the lithium precursor was added in an amount corresponding to 18 mol%.

Second washing was performed by mixing the annealed positive electrode active material and distilled water in a weight ratio of 1:1 and stirring the mixture at 500 rpm for 5 minutes. Then, vacuum filtration was performed to obtain solids. The solids were subjected to vacuum drying at 100 °C for 12 hours to obtain the washed positive electrode active material.

The washed positive electrode active material was coated with boric acid and heated at 300 °C for 5 hours to obtain a recycled positive electrode active material as a final product. At this time, boric acid was added in an amount corresponding to 1,000 ppm of boron lost in the previous process, the heating was performed at a temperature-increasing rate of 2 °C/min until the heat treatment temperature was reached, and air was supplied at a rate of 3 L/min.

In the present disclosure, the molar ratio between lithium and other metals in the positive electrode active material and the amount of residual LiF were measured using an IC analyzer. In this case, general ICP analyzers, which are widely used in laboratories, may be used, but there is no deviation depending on the measurement devices or methods.

### Comparative Example 1

A recycled positive electrode active material was prepared in the same manner as in Example 1 except that, in the oxidation heat treatment of Example 1, heat treatment was performed by introducing air (containing 21 % of oxygen) instead of oxygen.

### Comparative Example 2

A recycled positive electrode active material was prepared in the same manner as in Example 1 except that, in the oxidation heat treatment of Example 1, heat treatment was performed by introducing air (containing 21 % of oxygen) instead of oxygen, and the first washing step was omitted.

### Comparative Example 3

A recycled positive electrode active material was prepared in the same manner as in Example 1 except that the first washing step was omitted.

### [Test Example I: SEM analysis]

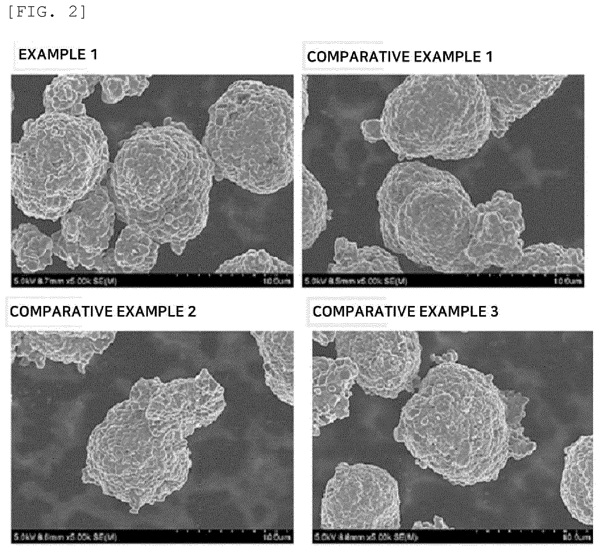

Images of the recycled positive electrode active materials obtained in Example 1 and Comparative Examples 1 to 3 were captured using a SEM device, and the images are shown in FIG. 2. At this time, the SEM images were obtained using a general SEM device commonly used in laboratories. Specifically, s-4200 (HITACHI Co.) was used. However, there is no deviation according to the measuring devices or methods.

As shown in FIG. 2 below, it can be confirmed that the recycled positive electrode active material prepared in Example 1 is split into small particles, and the split particles are in contact with large particles or dispersed. In contrast, in the case of Comparative Examples 1 to 3, particles are agglomerated without being split.

### [Test Example II: XRD analysis]

The crystallite sizes of the recycled positive electrode active materials obtained in Example 1 and Comparative Examples 1 to 3 were measured by XRD crystal analysis.

Specifically, 5 g of each of the recycled positive electrode active material particles obtained in Example 1 and Comparative Examples 1 to 3 was put into a holder, and diffraction grating generated when the particles are irradiated with X-rays was analyzed. Based on the half-width of main peaks or three or more peaks, the average crystallite size of the primary particles of the recycled positive electrode active material particles was determined, and the results are shown in Table 1 below.

**[Table 1]**

| Classification | Average crystallite size (nm) |
|---|---|
| Example 1 | 120 |
| Comparative Example 1 | 125 |
| Comparative Example 2 | 136 |
| Comparative Example 3 | 132 |

As shown in Table 1, it can be confirmed that the crystallite size of the recycled positive electrode active material prepared in Example 1 is reduced compared to that of Comparative Examples 1 to 3. As the crystallite size is reduced, strain is reduced and cycle cracks may be minimized, which increases the battery lifespan.

### [Test Example III: Content of residual fluorine (F)]

The amount of fluorine (F) remaining on the recycled positive electrode active materials obtained in Example 1 and Comparative Examples 1 to 3 was measured using an ICP analyzer, and the results are shown in Table 2 below. In this case, general ICP analyzers, which are widely used in laboratories, may be used, but there is no deviation depending on the measurement devices or methods.

**[Table 2]**

| Classification | F (mg/kg) |
|---|---|
| Example 1 | 190 |
| Comparative Example 1 | 660 |
| Comparative Example 2 | 6460 |
| Comparative Example 3 | 6620 |

As shown in Table 2, in the case of Example 1 according to the present invention, compared to Comparative Examples 1 to 3, the amount of residual fluorine is significantly reduced.

### [Test Example IV: Residual lithium content]

The residual lithium contents of the recycled positive electrode active materials obtained in Example 1 and Comparative Examples 1 to 3 were measured according to the following method, and the results are shown in Table 3 below.

* Residual lithium content: 5 g of the positive electrode active material was dispersed in 100 ml of distilled water and mixed at 300 rpm for 5 minutes, and then filtering was performed to filter out an active material and obtain a filtrate. Change in pH values was measured while titrating the filtrate with a 0.1 M HCl solution. Based on the measurement result, a pH titration curve was obtained. Using the pH titration curve, the amounts of residual LiOH and Li₂CO₃ in the positive electrode active material were calculated.

**[Table 3]**

| Classification | LiOH (wt%) | Li₂CO₃ (wt%) | Sum (wt%) |
|---|---|---|---|
| Example 1 | 0.31 | 0.19 | 0.50 |
| Comparative Example 1 | 0.33 | 0.20 | 0.52 |
| Comparative Example 2 | 0.44 | 0.23 | 0.67 |
| Comparative Example 3 | 0.53 | 0.06 | 0.59 |

As shown in Table 3, in the case of Example 1, compared to Comparative Examples 1 to 3, the residual lithium content of the recycled positive electrode active material is reduced.

### [Test Example V: CHC cell evaluation]

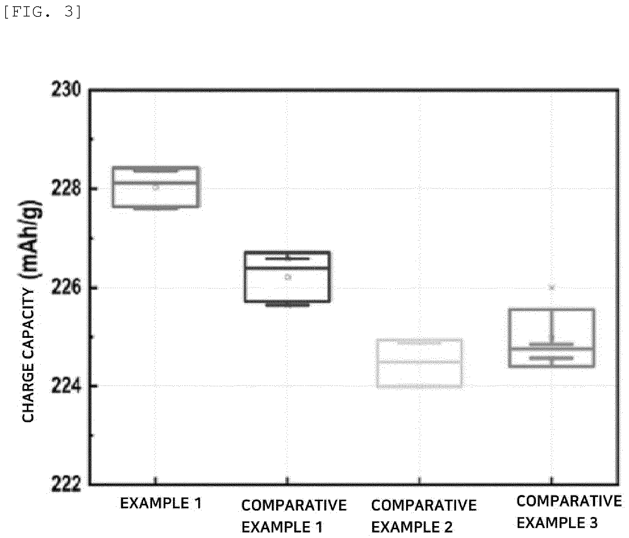

The electrochemical performance of the recycled positive electrode active materials obtained in Example 1 and Comparative Examples 1 to 3 was measured through CHC cell evaluation described below, and the results are shown in FIG. 3 below.
* CHC cell evaluation: 97.5 % by weight of a recycled positive electrode active material, 1 % by weight of carbon black as a conductive material, and 1.5 % by weight of PVdF as a binder were prepared and mixed in an NMP to obtain slurry, and aluminum foil was coated with the slurry to manufacture a positive electrode. Then, a cell (Coin Half Cell, CHC) was manufactured. The electrochemical performance (charge capacity, discharge capacity, and efficiency) was evaluated under the conditions of a voltage of 3 to 4.3 V; charge/discharge of 0.1C/0.1C; using an electrolyte solution having a weight ratio of ethylene carbonate (EC): ethyl methyl carbonate (EMC) = 3:7; and including other additives.

FIG. 3 below shows the results of coin cell evaluation for each of the recycled positive electrode active materials prepared in Example 1 and Comparative Examples 1 to 3. Referring to FIG. 3, it can be confirmed that the recycled positive electrode active material (Example 1) according to the present invention has excellent charge capacity compared to Comparative Examples 1 to 3.

### [Test Example VI: Mono cell evaluation]

The capacity retention rate and resistance increase rate of mono cells manufactured using the recycled positive electrode active materials obtained in Example 1 and Comparative Examples 1 to 3 were measured through mono cell evaluation described below, and the results are shown in FIG. 3 below.
* Manufacture of mono cell: As in the coin cell condition, positive electrode active material slurry was applied to aluminum foil having a thickness of 20 µm. Then, the aluminum foil was dried at 130 °C for 1 hour, and then blanked to a size of 30 mm × 42 mm to manufacture a positive electrode.

In addition, 95.6 % by weight of a mixture containing natural graphite and artificial graphite in a weight ratio of 5:5, 3.3 % by weight of a conductive material, and 1.1 % by weight of a binder were mixed to prepare negative electrode active material slurry. Then, the slurry was applied to copper foil having a thickness of 10 µm. The copper foil was rolled and dried, and then blanked to a size of 31 mm × 43 mm to manufacture a negative electrode.

After bonding the manufactured positive and negative electrodes to a separator, an electrolyte solution having a weight ratio of ethylene carbonate (EC) :ethyl methyl carbonate (EMC) of 3:7 was injected thereto, and vacuum sealing was performed to manufacture a mono cell. The mono cell was subjected to aging for 10 hours, and then electrochemical evaluation was performed.

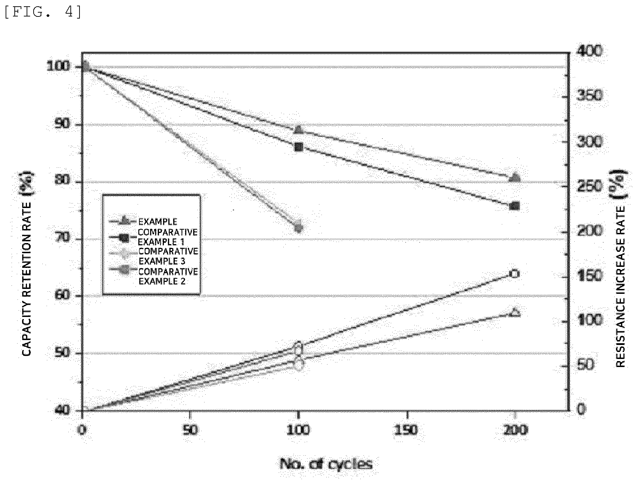

* Measurement of capacity retention rate at high temperature (45 °C): After performing, at a rate of 0.1C, formation of each of mono cells manufactured using the recycled positive electrode active materials obtained in Example 1 and Comparative Examples 1 to 3, gas in the cell was removed (degas process). Then, 4.2 V, 1 C, 0.05 C cut-off CC/CV charging and 2.5 V, 0.5 C CC discharging were performed 200 times at high temperature (45 °C). The discharge capacity after 1 cycle and the discharge capacity after 200 cycles were measured using a PNE-0506 charger and discharger (manufacturer: PNE Solution Co., Ltd., 5V, 6A) . The discharge capacity after 1 cycle was set as an initial capacity. Then, the 200th discharge capacity was compared with the initial capacity (100%), the capacity retention rate was calculated by Equation 1 below, and the results are shown in FIG. 4. Capacity retention rate (%) = (Discharge capacity after cycling at high temperature/initial discharge capacity) × 100
* Measurement of resistance increase rate at high temperature (45 °C): After performing, at a rate of 0.1C, formation of each of mono cells manufactured using the recycled positive electrode active materials obtained in Example 1 and Comparative Examples 1 to 3, gas in the cell was removed (degas process). The lithium secondary battery from which gas was removed was transferred to a charger/discharger at room temperature (25 °C). Then, charging was performed at a rate of 0.33 C up to 4.2 V under constant current/constant voltage conditions, and 0.05 C cut off charging was performed, followed by discharging under the conditions of 0.33 C and 2.5 V. Based on discharge capacity after the charge/discharge was performed three times, State Of Charge (SOC) was set to 50 %. At this time, through voltage drop that appears when a discharge pulse is given at 2.5 C for 10 seconds, DC internal resistance was measured using a PNE-0506 charger/discharger (manufacturer: PNE Solution, 5V, 6A). The resistance at this time was set as an initial resistance.

Thereafter, 4.2 V, 1C, 0.05 C cut-off CC/CV charging and 2.5 V, 0.5 C CC discharging were performed 200 times at high temperature (45 °C), and the lithium secondary battery was transferred to a charger/discharger at room temperature (25 °C). State Of Charge (SOC) was set to 50 %. Then, through voltage drop that appears when a discharge pulse is given at 2.5 C for 10 seconds, DC internal resistance was measured using a PNE-0506 charger/discharger (manufacturer: PNE Solution, 5V, 6A). The resistance was compared with the initial resistance (0 %), the resistance increase rate (%) was calculated using Equation 2, and the results are shown in FIG. 4. Resistance increase rate (%) = {(Resistance after cycling at high temperature - initial resistance)/Initial resistance} × 100

As shown in FIG. 4 below, as the number of cycles increases, Example 1 has a higher capacity retention rate and a lower resistance increase rate than Comparative Examples 1 to 3.

### [Additional Examples]

### Additional Example 1

After blanking a positive electrode plate, discarded positive electrode scraps (current collector: aluminum foil, positive electrode active material: NCM-based lithium composite transition metal oxide (nickel content: 86 mol%)) were crushed, oxygen having a purity of 95 % was injected into the crushed scraps, and then first heat treatment was performed at 350 °C for 2 hours. Then, the temperature was increased to 590 °C, and second heat treatment was performed for 30 minutes to remove a binder and a conductive material, separate a current collector and a positive electrode active material, and recover the positive electrode active material. At this time, the temperature was increased to the heat treatment temperature at a temperature-increasing rate of 5 °C/min, and oxygen (O₂) was supplied at a rate of 10 L/min.

First washing was performed by stirring while immersing the recovered positive electrode active material in distilled water as a washing liquid. At this time, the weight ratio of the recovered positive electrode active material to the washing liquid was set to 1:30, stirring was performed at 500 rpm for 10 minutes, and then vacuum filtration using a filter was performed to elute only the active material. In the first washed positive electrode active material, based on 1 mol of lithium in the positive electrode active material, 0.11 mol of lithium was reduced compared to the raw material.

The first washed positive electrode active material was dried at 100 °C overnight, LiOH as a lithium precursor was added thereto, and annealing was performed at 750 °C for 5 hours in air. At this time, air was supplied at a rate of 3 L/min. Based on 100 mol% in total of lithium in the positive electrode active material used as a raw material when forming the positive electrode active material layer, the lithium precursor was added in an amount corresponding to 18 mol%.

The annealed positive electrode active material and distilled water were mixed in a weight ratio of 1:10, second washing was performed by stirring at 500 rpm for 5 minutes, and vacuum filtration was performed to obtain solids. The solids were subjected to vacuum drying at 100 °C for 12 hours to obtain the washed positive electrode active material.

The washed positive electrode active material was coated with boric acid and heated at 300 °C for 5 hours to obtain a recycled positive electrode active material as a final product. At this time, boric acid was added in an amount corresponding to 1,000 ppm of boron lost in the previous process, the heating was performed at a temperature-increasing rate of 2 °C/min until the heat treatment temperature was reached, and air was supplied at a rate of 3 L/min.

In the present disclosure, the molar ratio of lithium and other metals and the amount of residual LiF in the positive electrode active material were measured using an ICP analyzer. In this case, general ICP analyzers, which are widely used in laboratories, may be used, but there is no deviation depending on the measurement devices or methods.

In the present disclosure, unless otherwise defined, ppm is by weight.

### Additional Example 2

A recycled positive electrode active material was prepared in the same manner as in Additional Example 1 except that first heat treatment was performed at 350 °C for 30 minutes, and second heat treatment was performed at 590 °C for 30 minutes.

### Additional Example 3

A recycled positive electrode active material was prepared in the same manner as in Additional Example 1 except that first heat treatment was performed at 350 °C for 30 minutes, and second heat treatment was performed at 570 °C for 30 minutes.

### Additional Comparative Example 1

A recycled positive electrode active material was prepared in the same manner as in Additional Example 1 except that first and second heat treatment was performed at 550 °C for 30 minutes.

### Additional Comparative Example 2

A recycled positive electrode active material was prepared in the same manner as in Additional Example 1 except that the recovered positive electrode active material was directly provided to the annealing step without first washing.

### [Test Example I: XRD analysis]

The crystallite sizes of the recycled positive electrode active materials obtained in Additional Examples 1 to 3 and Additional Comparative Example 1 were measured by XRD crystal analysis.

Specifically, 5 g of each of the recycled positive electrode active material particles obtained in Additional Examples 1 to 3 and Additional Comparative Example 1 was put into a holder, and diffraction grating generated when the particles are irradiated with X-rays was analyzed. Based on the half-width of main peaks or three or more peaks, the average crystallite size of the primary particles of the recycled positive electrode active material particles was determined, and the results are shown in Table 4 below.

**[Table 4]**

| Classification | Average crystallite size (nm) |
|---|---|
| Additional Example 1 | 138.5 |
| Additional Example 2 | 138.5 |
| Additional Example 3 | 134.5 |
| Additional Comparative Example 1 | 139.4 |

As shown in Table 4, it can be confirmed that the crystallite size of the recycled positive electrode active materials prepared in Additional Examples 1 to 3 is reduced compared to that of Additional Comparative Example 1. As the crystallite size is reduced, strain is reduced and cycle cracks may be minimized, which increases the battery lifespan.

### [Test Example II: Content of residual fluorine (F)]

The amount of fluorine (F) remaining on the recycled positive electrode active materials obtained in Additional Examples 1 to 3 and Additional Comparative Examples 1 and 2 was measured using an ICP analyzer, and the results are shown in Table 5 below. In this case, general ICP analyzers, which are widely used in laboratories, may be used, but there is no deviation depending on the measurement devices or methods.

**[Table 5]**

| Classification | F (mg/kg) |
|---|---|
| Additional Example 1 | 165 |
| Additional Example 2 | 165 |
| Additional Example 3 | 300 |
| Additional Comparative Example 1 | 315 |
| Additional Comparative Example 2 | 5705 |

As shown in Table 5, in the case of Additional Examples 1 to 3 according to the present invention, compared to Additional Comparative Examples 1 and 2, the amount of residual fluorine is reduced. In particular, in the case of Additional Comparative Example 2 in which first washing was omitted, the amount of residual fluorine is quite high.

### [Test Example III: Residual lithium content]

The residual lithium contents of the recycled positive electrode active materials obtained in Additional Examples 1 to 3 and Additional Comparative Examples 1 and 2 were measured according to the following method, and the results are shown in Table 6 below.
* Residual lithium content: 5 g of the positive electrode active material was dispersed in 100 ml of distilled water and mixed at 300 rpm for 5 minutes, and then filtering was performed to filter out an active material and obtain a filtrate. Change in pH values was measured while titrating the filtrate with a 0.1 M HCl solution. Based on the measurement result, a pH titration curve was obtained. Using the pH titration curve, the amounts of residual LiOH and Li₂CO₃ in the positive electrode active material were calculated.

**[Table 6]**

| Classification | LiOH (wt%) | Li₂CO₃ (wt%) | Sum (wt%) |
|---|---|---|---|
| Additional Example 1 | 0.32 | 0.08 | 0.4 |
| Additional Example 2 | 0.26 | 0.13 | 0.39 |
| Additional Example 3 | 0.29 | 0.15 | 0.44 |
| Additional Comparative Example 1 | 0.3 | 0.17 | 0.47 |
| Additional Comparative Example 2 | 0.29 | 0.19 | 0.48 |

As shown in Table 6, in the case of Additional Examples 1 to 3, compared to Additional Comparative Examples 1 and 2, the residual lithium contents of the recycled positive electrode active materials are reduced.

### [Test Example IV: CHC cell evaluation]

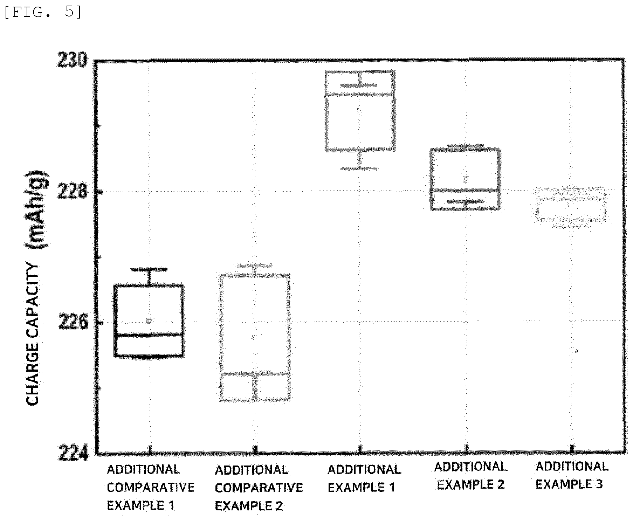

The electrochemical performance of the recycled positive electrode active materials obtained in Additional Examples 1 to 3 and Additional Comparative Examples 1 and 2 was evaluated through CHC cell evaluation described below, and the results are shown in FIG. 5 below.
* CHC cell evaluation: 97.5 % by weight of a recycled positive electrode active material, 1 % by weight of carbon black as a conductive material, and 1.5 % by weight of PVdF as a binder were prepared and mixed in an NMP to obtain slurry, and aluminum foil was coated with the slurry to manufacture a positive electrode. Then, a cell (Coin Half Cell, CHC) was manufactured using an electrolyte solution having a weight ratio of ethylene carbonate (EC):ethyl methyl carbonate (EMC) of 3:7 and containing other additives. The manufactured coin cell was charged at 25 °C and a constant current of 0.1C to 4.3V with 0.05 C cut off. Then, discharging was performed at a constant current of 0.1 C until the voltage reached 3.0 V. The charge capacity at this time was measured, and the results are shown in FIG. 5.

FIG. 5 shows the results of coin cell evaluation for each of the recycled positive electrode active materials prepared in Additional Examples 1 to 3 and Additional Comparative Examples 1 and 2. Referring to FIG. 5, it can be confirmed that the recycled positive electrode active materials (Additional Examples 1 to 3) according to the present invention have excellent charge capacity compared to Additional Comparative Examples 1 and 2.

### [Test Example V: mono cell evaluation]

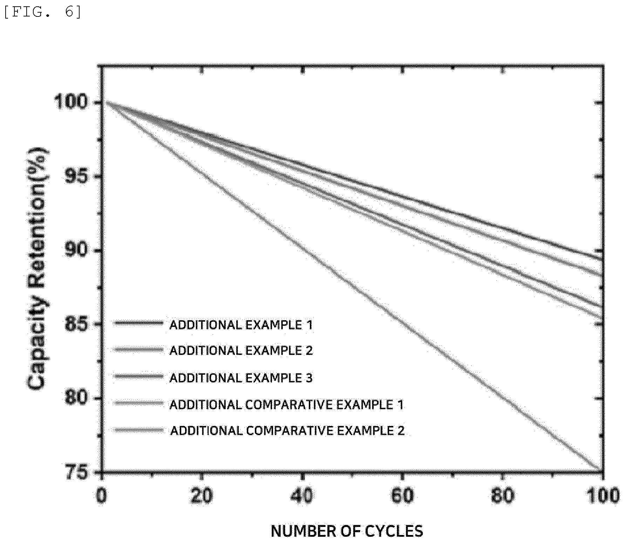

The capacity retention rates of mono cells manufactured using the recycled positive electrode active materials obtained in Additional Examples 1 to 3 and Additional Comparative Examples 1 and 2 were measured through mono cell evaluation described below, and the results are shown in FIG. 6 below.
* Manufacture of mono cell: As in the coin cell condition, positive electrode active material slurry was applied to aluminum foil having a thickness of 20 µm. Then, the aluminum foil was dried at 130 °C for 1 hour, and then blanked to a size of 30 mm × 42 mm to manufacture a positive electrode.

In addition, 95.6 % by weight of a mixture containing natural graphite and artificial graphite in a weight ratio of 5:5, 3.3 % by weight of a conductive material, and 1.1 % by weight of a binder were mixed to prepare negative electrode active material slurry. Then, the slurry was applied to copper foil having a thickness of 10 µm. The copper foil was rolled and dried, and then blanked to a size of 31 mm × 43 mm to manufacture a negative electrode.

After bonding the manufactured positive and negative electrodes to a separator, an electrolyte solution having a weight ratio of ethylene carbonate (EC):ethyl methyl carbonate (EMC) of 3:7 was injected thereto, and vacuum sealing was performed to manufacture a mono cell. The mono cell was subjected to aging for 10 hours, and then electrochemical evaluation was performed.
* Measurement of capacity retention rate at high temperature (45 °C): After performing, at a rate of 0.1C, formation of each of mono cells manufactured using the recycled positive electrode active materials obtained in Additional Examples 1 to 3 and Additional Comparative Examples 1 and 2, gas in the cell was removed (degas process). Then, 4.2 V, 1 C, 0.05 C cut-off CC/CV charging and 2.5 V, 0.5 C CC discharging were performed 100 times at high temperature (45 °C). The discharge capacity after 1 cycle and the discharge capacity after 100 cycles were measured using a PNE-0506 charger and discharger (manufacturer: PNE Solution Co., Ltd., 5V, 6A). The discharge capacity after 1 cycle was set as an initial capacity. Then, the 100th discharge capacity was compared with the initial capacity (100%), the capacity retention rate was calculated by Equation 1 below, and the results are shown in FIG. 6. Capacity retention rate (%) = (Discharge capacity after cycling at high temperature/initial discharge capacity) × 100

As shown in FIG. 6 below, as the number of cycles increases, Additional Examples 1 to 3 exhibit higher capacity retention rates than Additional Comparative Examples 1 and 2.

### [Description of Symbols]

10: CURRENT COLLECTOR
20: ACTIVE MATERIAL LAYER
30: POSITIVE ELECTRODE SHEET
40: POSITIVE ELECTRODE PLATE
50: POSITIVE ELECTRODE SCRAPS

## Claims

1. A positive electrode active material, comprising one or more selected from the group consisting of a lithium nickel oxide (LNO)-based positive electrode active material, a nickel·cobalt·manganese (NCM)-based positive electrode active material, a nickel·cobalt·aluminum (NCA)-based positive electrode active material, and a nickel·cobalt·manganese·aluminum (NCMA)-based positive electrode active material, comprising 60 mol% or more of Ni, containing fluorine (F) in an amount of 250 mg/kg or less, and having a crystallite size of 122 nm or less.

2. The positive electrode active material according to claim 1, wherein a surface of the positive electrode active material is coated with a coating agent containing a metal or carbon.

3. The positive electrode active material according to claim 2, wherein the metal is boron (B), tungsten (W), or a mixture thereof.

4. The positive electrode active material according to claim 1, wherein the positive electrode active material is a recycled positive electrode active material.

5. A method of recycling a positive electrode active material, comprising:
injecting oxygen into a waste positive electrode having a positive electrode active material layer comprising 60 mol% or more of Ni on a current collector and subjecting the waste positive electrode to oxidation heat treatment to thermally decompose a binder and a conductive material in the positive electrode active material layer to separate the current collector from the positive electrode active material layer and recover a positive electrode active material from the positive electrode active material layer;
first washing the recovered positive electrode active material;
adding a lithium precursor to the first washed positive electrode active material and performing annealing; and
second washing the annealed positive electrode active material.

6. The method according to claim 5, wherein the heat treatment is performed at 300 to 650 °C.

7. The method according to claim 6, wherein, in the heat treatment, first heat treatment is performed at 300 to 450 °C, and then second heat treatment is performed at 500 to 650 °C.

8. The method according to claim 7, wherein the first heat treatment is performed for 10 minutes to 3 hours, and the second heat treatment is performed for 10 minutes to 2 hours.

9. The method according to claim 5, wherein the oxygen has a purity of 59 % or more.

10. The method according to claim 5, wherein the first washing is performed by immersing the recovered positive electrode active material in water or a basic aqueous lithium compound solution as a washing liquid, or by stirring while immersing the recovered positive electrode active material in water or a basic aqueous lithium compound solution as a washing liquid.

11. The method according to claim 10, wherein the basic aqueous lithium compound solution comprises a lithium compound in an amount of greater than 0 % by weight and 15 % by weight or less.

12. The method according to claim 5, wherein, in the annealing, the adding a lithium precursor solution to the first washed positive electrode active material is to mix the first washed positive electrode active material and the lithium precursor solution and perform spray drying.

13. The method according to claim 5, wherein the second washing comprises mixing the annealed positive electrode active material and water as a washing liquid and performing filtration; and drying a solid positive electrode active material obtained after the filtration.

14. The method according to claim 5, wherein the lithium precursor comprises one or more of LiOH, Li₂CO₃, LiNO₃, and Li₂O.

15. The method according to claim 5, wherein, based on 100 mol% in total of lithium in a positive electrode active material used as a raw material when forming the positive electrode active material layer, the lithium precursor is added in an amount corresponding to 1 mol% to 40 mol%.

16. The method according to claim 5, wherein the annealing is performed at 400 to 1,000 °C.

17. The method according to claim 5, comprising obtaining a reusable positive electrode active material by coating a surface of the second washed positive electrode active material.

18. The method according to claim 17, wherein, in the surface coating, the surface is coated with one or more of a metal, an organic metal, and a carbon component in a solid or liquid manner, and then is heat-treated at 100 to 1,200 °C.

19. A positive electrode active material, comprising one or more selected from the group consisting of a lithium nickel oxide (LNO)-based positive electrode active material, a nickel·cobalt·manganese (NCM)-based positive electrode active material, a nickel·cobalt·aluminum (NCA)-based positive electrode active material, and a nickel·cobalt·manganese·aluminum (NCMA)-based positive electrode active material, comprising 60 mol% or more of Ni, containing fluorine (F) in an amount of 305 mg/kg or less, and having a crystallite size of 139 nm or less.

20. The positive electrode active material according to claim 19, wherein, in the positive electrode active material, a content of residual Li₂CO₃ is 0.16 % by weight or less.

21. A secondary battery, comprising the positive electrode active material according to any one of claims 1 to 4 and claims 19 and 20.
